# EUROPEAN PATENT SPECIFICATION

(11) **EP 1 647 132 B1**
(45) Date of publication and mention of the grant of the patent: **12.02.2014**
(21) Application number: 04731643.5
(22) Date of filing: 07.05.2004
(51) Int. Cl.: H04M 3/436

(54) **METHOD AND SYSTEM FOR DIRECTING CALLS**
VERFAHREN UND SYSTEM ZUR WEITERLEITUNG VON ANRUFEN
PROCEDE ET SYSTEME POUR DIRIGER DES APPELS

(30) Priority: 09.05.2003 FI 20030703
(43) Date of publication of application: 19.04.2006
(73) Proprietor: Vihinen, Seppo Tapani, 01230 Vantaa (FI)
(72) Inventor: Vihinen, Seppo Tapani, 01230 Vantaa (FI)
(74) Representative: Söderman, Lisbeth Karin
(86) International application number: PCT/FI2004/000276
(87) International publication number: WO 2004/100515

(56) References cited:
- US-A- 5 434 906
- US-A1- 2002 059 527
- US-B1- 6 438 216
- US-B1- 6 545 589

## Description

### TECHNICAL FIELD

The invention is concerned with a method and a system for directing calls in a telecommunication network comprising a first phone of a caller and a call processing unit with messages recorded therein.

### BACKGROUND

There are different ways to handle such incoming calls to mobile or other phones, which cannot be answered straight away by the receiver. Normally, the receiver either keeps the phone shut or if he wants to see the incoming call attempts, the telephone is kept in silent mode.

Calls that are not answered usually end up to a recorded message in a voice mail service after a delay if the call is not answered. The owner of the phone might also reject the incoming call, which also can end up to said recorded message in the voice mail service.

It is also technically possible to direct calls not answered to a different number, e.g. to the number of the secretary, or to a voice mail box, that gives a different message. In this case, however, also the message to be left in the voice mail box would be directed to this box, which would require checking of two voice mail boxes.

There are also voice mail services, based on e.g. the Interactive Voice Response (IVR) service, which gives different messages to the caller according to different criteria. Thus, e.g. callers calling from other countries would hear a dedicated message (e.g. a message in English), caller from certain numbers would hear dedicated messages (based on cli of caller), a given message is sent for a given time, e.g. according to expected duration of a meeting. Thus, e.g. callers calling from other countries would get an own message (e.g. in English), caller from certain A numbers own messages, a given message is sent for a given time, e.g. according to the evaluated time of a meeting. Especially the latter alternatives require settings to be made before each meeting or other special situation and therefore it has become popular. Special settings to for specific CLI numbers are easily forgotten on and not reset in due time.

Interactive Voice Response (IVR) systems are equipped with software applications that accept input as spoken words and/or and touch-tone keypad selection and provides appropriate responses in the form of voice, fax, callback, e-mail or other media. IVR is usually part of a larger application that includes database access. Common IVR applications include bank and stock account balances and transfers, surveys and polls, call center forwarding, simple order entry transactions and selective information lookup (movie schedules, etc.). An IVR application provides pre-recorded voice responses for appropriate situations, keypad signal logic, access to relevant data, and potentially the ability to record voice input for later handling. Using computer telephony integration (CTI), IVR applications can hand over a call to a human being who can view data related to the caller at a display.

DTMF is short for Dual Tone Multi-Frequency, the system used by touch-tone telephones. DTMF assigns two specific frequencies, or tones, to each key so that they easily can be identified by a microprocessor.

Reference is made to a prior art solution presented in US patent 5,434,906, wherein an incoming call goes via a network entity presenting different communicating alternatives to the receiver.

### THE OBJECT OF THE INVENTION

The object of the invention is to create a method with which incoming calls can be handled in a flexible way but without the need to alter settings daily.

### SUMMARY OF THE INVENTION

The method of the invention for directing calls is performed in a telecommunication network, comprising at least one phone and a call processing unit with one or more messages recorded therein. The messages correspond to selectable functions according to which a communication in the network takes place. The method comprises the steps of making a call from the call processing unit to the receiver phone, selecting a function at the receiver phone and phone signaling said selected function from the receiver phone to the call processing unit, and continuing the communication in accordance with the selected function.

The system of the invention for directing calls in a telecommunication network comprises at least one phone and a call processing unit with one or more messages recorded therein. The messages correspond to selectable functions according to which a communication in the network takes place. The call processing unit having means to start a communication with the receiver in accordance with the selected function.

The call from the call processing unit to the receiver phone can be initiated either by directing an incoming call from the receiver phone to the call processing unit, after which a call back from the call processing unit to the receiver phone is made. In that case, the telecommunication network also comprises a phone of a caller, and a message sent form the call processing unit, which message corresponds to the selected function, is presented for the caller of the incoming call. The call from the call processing unit to the receiver phone can also be initiated by an incoming call from a caller, which starts said communication of successive calls to be answered or rejected by the receiver or it can be initiated by a timing function performed in the call processing unit according to which the call processing unit starts said communication of successive calls at (a) given time(s).

The phones can be fixed telephones or mobile phones.

The other preferable embodiments of the invention have the characteristics of the subclaims.

A call processing unit is in this text a device that can handle multiple incoming and outgoing calls, and is able to play recorded prompts as well as act upon the feedback given by the call parties through message commands, such as DTMF, and/or through voice messages.

The call can either be directed to the call processing unit from the receiver phone by means of a certain button on a phone, which connects the call to the call processing unit or the call can be directed to the call processing unit automatically if the call is not answered by the receiver phone or if the receiver is busy with another call.

In case of the automatic transfer, the caller phone receives a message sent form the call processing unit, the message being a standard message. Thus, the receiver can select the standard message either by pressing on a certain button connecting the call to the standard message or by not answering the incoming call.

The user of the receiver phone can use the non-automatic transfer of the incoming call to the call processing unit whenever he wishes to do so, even during another call. This is performed by some basic settings, which give the receiver the possibility to see all incoming call attempts also when he has another call. The message can be directed to the call processing unit, while the other call is kept open or in a waiting state. After having directed the incoming call to the call processing unit, the receiver can return to the on-going call. The caller can then listen to the messages played from the call processing unit when the receiver is continuing the on-going call.

Another possibility is to make use of delayed transfer of the incoming call to the call processing unit. In that case, the first thing the receiver sees is just an indication of an incoming call to come and not needed to react on. The receiver has then more time to think how to answer the call to come in a few seconds. The second incoming call (that comes from the call processing unit) is then e.g. indicated on the screen by a certain text or telephone number easy to recognize. There is, however, time for the receiver B to react anyway, since there is a little delay after that the user directed the incoming call from the caller A to the call processing unit until the call processing unit calls the receiver back. When this return call from the call processing unit comes, it is preferably indicated on the screen with a text or a number easy to recognize.

When the call processing unit calls the receiver B back (after that the receiver has directed the incoming call from the caller to the call processing unit), it uses preferably a different channel, which is not in connection with the caller A. Thus, the caller A will not overhear anything from the recipient's end.

In a certain embodiment of the invention, there are special pre-recorded messages used as parts of messages to be selected and combined. For most situations a suitable message can be collected by combining some of these message parts and there is then not any need to record special messages for each situation.

There can be several different messages recorded in the call processing unit. In addition to a standard message there can be a couple of "basic messages", such as "I am busy", "I am in a meeting", or "I am busy, call you later" which are connected by means of certain buttons on the receiver phone, such as 1, 2 and 3. More messages can be recorded to be connected by other buttons. Such "basic" messages are triggered by means of only one button.

A combined message can be performed by using two or more buttons or by pressing a certain button more than once. Thus, time information can be enclosed to the basic message telling when the recipient is free to receive calls again. The, e.g. 1 can mean "after one hour", 2 can mean "after two hours", 8 can mean "after eight hours" etc. In this example the combination of the button "23" would mean "I am in a meeting, and will be available again in three hours". Messages can be combined from even more buttons. When using messages requiring several buttons, the end of the command string is indicated by a designated button (usually #) or by time-out (typically two seconds).

Furthermore, the call processing unit can be used to send out messages to certain numbers at given pre-programmed times.

The messages can be recorded by the user himself or someone else.

The timing of the different steps in the invention has to be paid attention to. Time is needed in order to reach the receiver B again after the rejected first call from the caller A and for the recipient B to give the call processing unit the right digits for choosing the appropriate message.

As an example, the call reaches the call processing unit in 12 seconds and the message is selected by the receiver after 15 seconds. It is usually advisable to let the receiver B finish the call to the call processing unit, or at least answer it, before playing or sending any messages to the caller A. Naturally, other times can be used.

Special situations occur if the receiver does not answer the call from the call processing unit or answers but does not select a message, then another call can be initiated from the call processing unit after a while.

A special situation is also if the selected call function is that the receiver gives the possibility for the caller for a direct connection. This function can e.g. be performed by playing a message to the caller that "I am busy but if it is important to reach me live, press the ...button ". This function can be installed and the direct call is arranged if the caller presses a certain button.

Alternatively, the caller can simply be instructed to either hold on if he needs to speak live, or just hang up, if he does not have the need to speak live.

The opened connection can also be used for conference calls:
Some buttons can be used for forwarding the calls to a third party. This can be done by the receiver by means of e.g. three buttons, the first one selecting a basic message, the second one additional information, and the third one selecting the forwarding function to a special number programmed in advance to the call processing unit. Alternatively, the recipient can simply choose one digit to initiate a played message and forward it to a pre-defined number.

The call is directed to the call processing unit by means of a special service number. Either this number is programmed in the SIM card of the receiver mobile phone, whereby it is the same for all subscribers. Each subscriber can also have an own number, e.g. derived from his normal telephone number, which can be done in a way by using standard technology, such as with the number when called to a voice mail of prior art. The call processing unit is preferably an IVR. Dual Tone Multi-Frequency DTMF technology is used to assign a specific signal to each button for the selection of the messages, which usually are voice messages, but Short Message Service messages (SMS) or other text messages, e-mails, or other type of data can also be used.

The caller can be given the possibility to leave a message after that the caller has got the message chosen by the receiver through the call processing unit. This is preferably performed so that the call processing unit opens a connection to the receiver's standard voice mail box while the message to the caller is played. Then the caller can start speaking the message immediately after having heard the message sent to him. An alternative is that the message from the caller first recorded in the call processing unit, which then transfers it to the standard voice mail box of the receiver.

The invention provides a method for a user of a mobile phone to give the most informative message to the caller case by case in a simple way without the need to answer the phone by speaking.

The function is based on a) standard technology for transferring calls in mobile networks and b) the possibility to route incoming calls in call processing units.

In the method of the invention, the post treatment of the call is handled in such a way that the IVR apparatus is in contact with the caller (subscriber A) and the receiver (subscriber B) through separate channels. The caller A hears a message consisting of pre-recorded parts. As selected by recipient B by pressing on certain button(s) on his phone.

It is an important advantage that the service of the invention does not require any special settings to be made by the user, e.g. before each meeting or other such situation, during which calls can not be answered.

Another advantage is that, the receiver gets an indication from each call attempt, so that the receiver can evaluate the situation in real time an decide the best way to answer the call, if there is something special to inform according to caller and actual situation. If there is not anything special the receiver wants to inform the caller about, then he can choose not to do anything to let the call end up to a standard message.

In a basic embodiment of the invention, the user of the mobile phone can see the incoming call attempts and can react on them in a flexible way. A further advantage is that it is not necessary to reset settings or do anything else after the end of the meeting or other situation during which the calls could not be answered.

For the mobile operator it is an advantage that the calls are normal calls in the mobile network to start with, and they are transferred to "special NETWORK resources" by means of standardized call transfer technology (e.g. the IVR technology described). Thus, the service can be offered to all subscribers immediately. The capacity of the special resources can be increased along with the number of active users.

The invention can be implemented into almost all modern IVR devices.

In the following the invention is described in detail by referring to a certain embodiment of the method of the invention and some figures. The intention is not to restrict the invention to the details of the following presentation and this example is particularly concerned with the case wherein, the call from the call processing unit to the receiver phone is initiated by a cal from a caller A. In other embodiments there do not need to be any incoming call to the receiver phone.

### FIGURES

Figure 1 is a view of a network, wherein the invention can be implemented
Figure 2 is a signal diagram of the method of the invention

### DETAILED DESCRIPTION

The method of the invention for directing calls is applied in a mobile telecommunication network comprising a first phone 1 of a caller, a second mobile phone 2 of a receiver, and a call processing unit 4 with two or more messages recorded therein. The call processing unit is preferably an Interactive Voice Response (IVR) unit.

The mobile telecommunication network is here assumed to be the GSM network. Thus, it comprises a GSM center 3, through which all calls are directed.

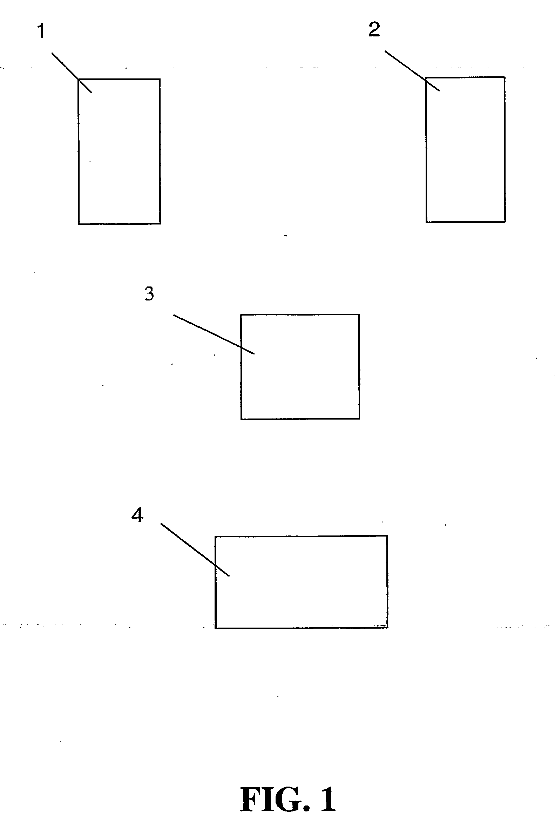

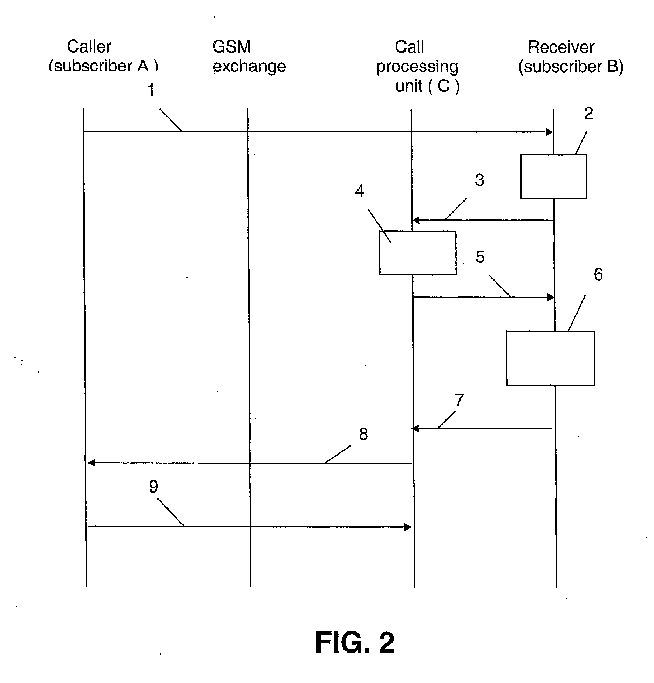

Figure 2 presents a signal diagram of the method of the invention applied in the network of figure 1. The times indicated are from the start, i.e. from the moment at which caller A initiated the call.

The method starts with the subscriber A calling the intended recipient, subscriber B. This call is illustrated by signal 1 in figure 2. When reached (e.g. in 5 seconds from call initiation), the subscriber B rejects the call, e.g. after 15 seconds from call initiation, illustrated as step 2 in figure 2, as a consequence of which the call is transferred to the call processing unit as signal 3 after 16 seconds from call initiation.

While preparing for a message to be played to caller A , in step 4 after 17 seconds, the call processing unit makes a call back to caller B with signal 5. In e.g. 22 seconds, the call reaches caller B, who takes the call after 24 seconds and then selects a function in step 6 in form of a DTMF command after e.g. 25 seconds. The selected function is then informed to the call processing unit with signal 7. The call processing unit then plays the message chosen by caller B , to caller A in signal 8 after ca 32 seconds. Caller A can then after ca 35 seconds either close the call (not shown), call a third party (not shown) or leave a message for caller B to the call center in signal 9.

There are even further options within the scope of the invention. The call can e.g. be connected through, which means that the channels between the caller and the receiver are connected and a normal call is performed. This can be performed by sending a message to the caller, who is asked to press on a certain button, whereafter the call is connected. This takes place then only if the caller so requests.

A recording possibility can also be provided as the connection has been created through the call processing unit. The caller is usually notified about call recording before connecting the call.

A possibility to connect the call to a third party or as a conference call in such a way that a third party is pre-programmed behind one button. The conference call or the call to the third party is then selected by a certain button combination pressed by the receiver.

The outgoing call functionality can in a special embodiment be performed independently of the voice mail functionality. This is used in connection with e.g. a check-lists to be confirmed. In this embodiment the buttons pressed on the receiver starts a communication between the call processing unit and the receiver, in such a way that the receiver confirms each step in the check list by pressing on e.g. "0", or the red hook. A way to perform this method is to use number combinations to means certain questions and answers in the communication.

In the check-list embodiment, by using call rejection to indicate 'OK' , quite long sequences can be established in cases where standard routines are done repeatedly. E.g. by storing different terms on the phone memory and making call attempts to the recipient using respective CLI (calling line identification), the following type of check list could be gone through:
Hospital assistant receives an automated call with instructions: Indicate "ok" by using call rejection. Quite long sequences can be established in cases where standard routines are done repeatedly.

E.g. by storing different terms on the phone memory and making call attempts to the recipient using respective CLI (calling line identification), the following type of check lists could be gone through:
Hospital assistant receives an automated call showing:
   OPER THEATRE READY? By rejecting the call he answers OK.
Additional questions related to this are then received, first e.g:
   ALL EQUIPMENT AVAILABLE? By rejecting the call he answers OK
Next question:
   ALL NURSES PRESENT? By rejecting the call he would answer OK, but in this case he answers the call and presses 5.

indicating that he expects all be present in 5 minutes.

This feedback goes to the surgeon e.g. as a text message, beeper message or e-mail message. When everything is ready for operation, the surgeon can be alerted with a higher priority message, e.g. an automated call.

The following examples are presented to further illustrate the invention.

### EXAMPLE

In this example a first caller tries to call to a second mobile phone of a receiver in a mobile telecommunication network comprising a call processing unit.

The receiver rejects the call by pressing on a certain button, in this example "the red hook", the call being thereby directed to the call processing unit.

As a consequence of this button, a call back from the call processing unit to the receiver phone is performed. If the receiver takes the call, he presses on the "green hook" button and can see a menu of functions on the screen on the mobile phone to be selected by pressing on one or more buttons. Alternatively, he needs to know the options by heart.

The call processing unit has three basic messages recorded therein. Each message is selectable by the receiver phone through on one or more buttons connecting to one or more selected messages. The connection between the buttons and the messages can e.g. be the following:

| Button | Message |
|---|---|
| 1 | I am busy now |
| 2 | I am in a meeting |
| 3 | I call you soon |

Button 0 is reserved for a function, by pressing on which a call back from the call processing unit to the receiver is performed. Subscribers A and B are then connected for a live conversation.

Buttons 4,5, and 6 are messages that can be connected to the basic messages. Thus they might be

| Button | Message |
|---|---|
| 4 | I will call when free |
| 5 | Send a text message to me |
| 6 | Leave a voice message for one-way communication |

Optionally, a further button can be pressed after the first one. The further message can then be e.g.

| Button | Message |
|---|---|
| 1 | I willl be free in 1 hour |
| 2 | I will be free in 2 hours |
| 3 | I will be free in 3 hours |
| | |
| 9 | I will be free in 9 hours |

If the receiver now presses 2 + 4 +3, instructions to play "I am in a meeting. I will call when free. I will be free in 3 hours" is given to the call processing unit. This message is played to the caller as a voice message.

## Claims

1. Method for directing calls in a telecommunication network comprising at least one phone and a call processing unit with one or more messages recorded therein, the messages corresponding to selectable functions according to which a communication in the network takes place,
**characterized by** the steps of
a) directing an incoming call not answered by the receiver phone from the receiver phone to the call processing unit, after which a call back from the call processing unit to the receiver phone is made,
b) selecting a function at the receiver phone and signaling said selected function from the receiver phone to the call processing unit, and
c) continuing the communication in the network in accordance with the selected function.

2. Method of claim 1, **characterized in that** in step b), the recipient selects a further function that forwards the call to a special number or as a conference call programmed in advance in the call processing unit.

3. Method of claim 1, **characterized in that** after step b), presenting for the caller of the incoming call, a message sent from the call processing unit, which message corresponds to the selected function.

4. Method of any of claims 1 - 3, **characterized in that** the incoming call is directed to the call processing unit from the receiver phone by pressing on a certain button or certain buttons on the phone, which connects the call to the call processing unit.

5. Method of any of claims 1 - 3, **characterized in that** the incoming call is directed to the call processing unit automatically if the receiver has another on-going call.

6. Method of any of claims 1 - 3, **characterized in that** the incoming call is directed to the call processing unit by means of a special service number.

7. Method of claim 1, **characterized in that** in step b), the selected function is a message to be played or sent to the caller of the incoming call, the selection being performed by means of one or more button(s), which connects the desired message(s) to the caller.

8. Method of claim 1, **characterized in that** in step b), the selected function is a message to be played or sent to the caller of the incoming call, the selection being performed by not answering the return call made by the call processing unit in step a), as a consequence of which selection the desired message(s) are connected to the caller of the incoming call.

9. Method of claim 1, **characterized in that** in step b), the selected call function is a selection, which results in a communication between the call processing unit and the receiver, the communication being performed by successive return calls to the receiver to be answered or rejected by the receiver.

10. Method of claim 1 and 9, **characterized in that** the call from the call processing unit to the receiver phone in step a) is initiated by an incoming call from a caller, which starts said communication of successive calls to be answered or rejected by the receiver.

11. Method of claim 1 and 9, **characterized in that** the call from the call processing unit to the receiver phone in step a) is initiated by a timing function performed in the call processing unit according to which the call processing unit starts said communication of successive calls at (a) given time(s).

12. Method of any of claims 9 - 11, **characterized in that** the time intervals between the successive calls are separately regulated or timed intelligently.

13. Method of any of claims 9 - 12, **characterized in that** said communication is a check-list with issues to be confirmed by the receiver one by one.

14. Method of any of claims 9 - 13, **characterized in that** the issues in the check list are confirmed by the receiver by not answering the return calls or by pressing on one or more buttons.

15. Method of claim 1, **characterized in that** the function selected in step b) is a message combined from two or more messages recorded in the call processing unit.

16. Method of claim 15, **characterized in that** in step b), the selected call function is a message to be played or sent to the caller, the selection being performed by means of one or more buttons, which connects the desired combined message to the caller.

17. Method of claim 1, **characterized in that** the call function selected in step b) or selected by not answering is a standard message recorded in the call processing unit,

18. Method of claim 1, **characterized in that** in step b), the selected function is a message to be sent to the caller of the incoming call and/or receiver with the information how to select a direct call, a conference call or a message function.

19. Method of claim 18, **characterized in that** the direct call is performed by means of a certain button on the caller and/or receiver phone which opens a connection between the caller and the receiver to be used for a normal call, a conference call or for recording a message.

20. Method of claim 19, **characterized in that** the form of the direct call is started by the receiver.

21. Method of claim 1, **characterized by** the further step d) of leaving or sending a message by the caller to the call processing unit for the receiver.

22. Method of claim 21, **characterized in that** step d) is performed to the receiver's message box through a connection opened by the call processing unit during the message to the caller.

23. Method of claim 22, **characterized in that** step d) is performed to the call processing unit and thereafter the message is transferred to the message box of the receiver.

24. Method of any of claims 1 - 23, **characterized in that** the call processing unit is an Interactive Voice Response, IVR, unit.

25. Method of any of claims 1 - 24, **characterized in that** Dual Tone Multi-Frequency, DTMF, technology or Voice Recognition is used for the selection of the messages to be played or sent.

26. Method of any of claims 1 - 24, **characterized in that** the messages
are voice messages, Short Message Service messages, SMS, or other text messages, e-mails, or other type of data.

27. Telecommunication system comprising at least one caller phone, at least one receiver phone and a call processing unit with two or more messages recorded therein, the messages corresponding to selectable functions according to which a communication in the network takes place,
**characterized in that** the system comprises functionality according to which incoming calls not answered by the receiver phone are directed from the receiver phone to the call processing unit, after which a call back from the call processing unit to the receiver phone is made, and **in that** the call processing unit have means to continue the communication in accordance with the selected function made by the receiver phone.

28. System of claim 27, **characterized in that** each message is selectable by the receiver by pressing on one or more buttons or places on a touch screen.

29. System of claim 27, **characterized in that** each message is selectable by spoken words.

30. System of any of claims 27 - 29, **characterized in that** the call processing unit is an Interactive Voice Response, IVR, unit.

## Patentansprüche

1. Verfahren zur Weiterleitung von Anrufen in einem Telekommunikationsnetz, aufweisend mindestens ein Telefon und eine Rufverarbeitungseinheit mit einer oder mehreren in dieser aufgezeichneten Nachricht(en), wobei die Nachrichten auswählbaren Funktionen entsprechen, nach denen eine Kommunikation in dem Netz stattfindet,
**gekennzeichnet durch** die folgenden Schritte
a) Weiterleitung eines eingehenden Anrufs, der von dem Empfängertelefon nicht beantwortet wird, von dem Empfängertelefon zu der Rufverarbeitungseinheit, woraufhin ein Rückruf von der Rufverarbeitungseinheit zu dem Empfängertelefon erfolgt,
b) Auswählen einer Funktion an dem Empfängertelefon und Signalisieren der ausgewählten Funktion von dem Empfängertelefon an die Rufverarbeitungseinheit, und
c) Fortsetzen der Kommunikation in dem Netz gemäß der ausgewählten Funktion.

2. Verfahren nach Anspruch 1, **dadurch gekennzeichnet, dass** der Empfänger in Schritt b) eine weitere Funktion auswählt, die den Anruf an eine Sondernummer oder als eine Konferenzschaltung weiterleitet, die zuvor in die Rufverarbeitungseinheit einprogrammiert wurde.

3. Verfahren nach Anspruch 1, **dadurch gekennzeichnet, dass** dem Anrufer des eingehenden Anrufs nach Schritt b) eine von der Rufverarbeitungseinheit gesendete Nachricht präsentiert wird, wobei die Nachricht der ausgewählten Funktion entspricht.

4. Verfahren nach einem der Ansprüche 1 bis 3, **dadurch gekennzeichnet, dass** der eingehende Anruf durch Drücken eines bestimmten Knopfes oder bestimmter Knöpfe auf dem Telefon von dem Empfängertelefon zur Rufverarbeitungseinheit weitergeleitet wird, die den Anruf mit der Rufverarbeitungseinheit verbindet.

5. Verfahren nach einem der Ansprüche 1 - 3, **dadurch gekennzeichnet, dass** der eingehende Anruf automatisch an die Rufverarbeitungseinheit weitergeleitet wird, wenn der Empfänger einen anderen laufenden Anruf hat.

6. Verfahren nach einem der Ansprüche 1 bis 3, **dadurch gekennzeichnet, dass** der eingehende Anruf durch eine Sonderdienstnummer an die Rufverarbeitungseinheit weitergeleitet wird.

7. Verfahren nach Anspruch 1, **dadurch gekennzeichnet, dass** in Schritt b) die ausgewählte Funktion eine dem Anrufer des eingehenden Anrufs abzuspielende oder an den Anrufer zu sendende Nachricht ist, wobei die Auswahl durch einen oder mehrere Knöpfe erfolgt, die die gewünschte(n) Nachricht(en) zu dem Anrufer schalten.

8. Verfahren nach Anspruch 1, **dadurch gekennzeichnet, dass** in Schritt b) die ausgewählte Funktion eine dem Anrufer des eingehenden Anrufs abzuspielende oder an den Anrufer zu sendende Nachricht ist, wobei die Auswahl durch die Nichtbeantwortung des Rückrufs durch die Rufverarbeitungseinheit in Schritt a) erfolgt, auf Grund welcher Auswahl die gewünschte(n) Nachricht(en) zu dem Anrufer des eingehenden Anrufs geschaltet wird.

9. Verfahren nach Anspruch 1, **dadurch gekennzeichnet, dass** in Schritt b) die ausgewählte Ruffunktion eine Auswahl ist, die zu einer Kommunikation zwischen der Rufverarbeitungseinheit und dem Empfänger führt, wobei die Kommunikation durch aufeinander folgende Rückrufe an den Empfänger vorgenommen wird, die von dem Empfänger angenommen oder abgelehnt werden.

10. Verfahren nach Anspruch 1 und 9, **dadurch gekennzeichnet, dass** der Anruf von der Rufverarbeitungseinheit zu dem Empfängertelefon in Schritt a) durch einen eingehenden Anruf von einem Anrufer eingeleitet wird, wodurch die Kommunikation von aufeinander folgenden Anrufen, die von dem Empfänger angenommen oder abgelehnt werden, gestartet wird.

11. Verfahren nach Anspruch 1 und 9, **dadurch gekennzeichnet, dass** der Anruf von der Rufverarbeitungseinheit zu dem Empfängertelefon in Schritt a) durch eine Zeitsteuerungsfunktion eingeleitet wird, die in der Rufverarbeitungseinheit vorgenommen wird, gemäß welcher die Rufverarbeitungseinheit mit der Kommunikation von aufeinander folgenden Anrufen zu einem festgelegten Zeitpunkt (zu festgelegten Zeitpunkten) beginnt.

12. Verfahren nach einem der Ansprüche 9 - 11, **dadurch gekennzeichnet, dass** die Zeitintervalle zwischen den aufeinander folgenden Anrufen getrennt geregelt oder intelligent zeitgesteuert werden.

13. Verfahren nach einem der Ansprüche 9 - 12, **dadurch gekennzeichnet, dass** die Kommunikation eine Checkliste mit von dem Empfänger nacheinander zu bestätigenden Punkten ist.

14. Verfahren nach einem der Ansprüche 9 - 13, **dadurch gekennzeichnet, dass** die Punkte in der Checkliste von dem Empfänger bestätigt werden, indem er die Rückrufe nicht beantwortet oder indem er auf einen oder mehrere Knöpfe drückt.

15. Verfahren nach Anspruch 1, **dadurch gekennzeichnet, dass** die in Schritt b) ausgewählte Funktion eine Nachricht ist, die aus zwei oder mehr, in der Rufverarbeitungseinheit aufgezeichneten Nachrichten, kombiniert und ausgewählt ist.

16. Verfahren nach Anspruch 15, **dadurch gekennzeichnet, dass** in Schritt b) die ausgewählte Ruffunktion eine dem Anrufer abzuspielende oder an diesen zu sendende Nachricht ist, wobei die Auswahl durch einen oder mehrere Knöpfe erfolgt, die die gewünschte kombinierte Nachricht zu dem Anrufer schaltet.

17. Verfahren nach Anspruch 1, **dadurch gekennzeichnet, dass** die in Schritt b) ausgewählte oder durch Nichtbeantwortung ausgewählte Ruffunktion eine in der Rufverarbeitungseinheit aufgezeichnete Standardnachricht ist.

18. Verfahren nach Anspruch 1, **dadurch gekennzeichnet, dass** in Schritt b) die ausgewählte Funktion eine Nachricht ist, die zusammen mit der Information, wie ein Direktruf, eine Konferenzschaltung oder eine Nachrichtenfunktion ausgewählt wird, an den Anrufer des eingehenden Anrufs und/oder den Empfänger zu senden ist.

19. Verfahren nach Anspruch 18, **dadurch gekennzeichnet, dass** der Direktruf durch einen bestimmten Knopf auf dem Anrufer- und/oder Empfängertelefon vorgenommen wird, der eine Verbindung zwischen dem Anrufer und dem Empfänger zur Verwendung für einen normalen Anruf, eine Konferenzschaltung oder zum Aufzeichnen einer Nachricht öffnet.

20. Verfahren nach Anspruch 19, **dadurch gekennzeichnet, dass** die Form des Direktrufs von dem Empfänger gestartet wird.

21. Verfahren nach Anspruch 1, **gekennzeichnet durch** den weiteren Schritt d) des Hinterlassens oder Sendens einer Nachricht für den Empfänger von dem Anrufer zu der Rufverarbeitungseinheit.

22. Verfahren nach Anspruch 21, **dadurch gekennzeichnet, dass** Schritt d) an die Mailbox des Empfängers durch eine Verbindung erfolgt, die während der Benachrichtigung an den Anrufer von der Rufverarbeitungseinheit geöffnet wird.

23. Verfahren nach Anspruch 22, **dadurch gekennzeichnet, dass** Schritt d) an die Rufverarbeitungseinheit erfolgt und die Nachricht anschließend an die Mailbox des Empfängers übertragen wird.

24. Verfahren nach einem der Ansprüche 1 - 23, **dadurch gekennzeichnet, dass** die Rufverarbeitungseinheit eine Sprachdialogsystemeinheit (Interactive Voice Response, IVR) ist.

25. Verfahren nach einem der Ansprüche 1 - 24, **dadurch gekennzeichnet, dass** eine Doppeltonmehrfrequenz-, DTMF-Technologie, oder eine Spracherkennung für die Auswahl der abzuspielenden oder zu sendenden Nachrichten verwendet wird.

26. Verfahren nach einem der Ansprüche 1 - 24, **dadurch gekennzeichnet, dass** die Nachrichten Sprachnachrichten, Kurznachrichtendienst-, SMS-Nachrichten oder andere Textnachrichten, E-Mails oder andere Arten von Daten sind.

27. Telekommunikationssystem, aufweisend mindestens ein Anrufertelefon, mindestens ein Empfängertelefon und eine Rufverarbeitungseinheit mit einer oder mehreren, darin aufgezeichneten Nachrichten, wobei die Nachrichten auswählbaren Funktionen entsprechen, gemäß denen eine Kommunikation in dem Netz stattfindet,
**dadurch gekennzeichnet, dass** das System eine Funktionalität aufweist, gemäß der eingehende Anrufe, die nicht von dem Empfängertelefon beantwortet werden, von dem Empfängertelefon an die Rufverarbeitungseinheit weitergeleitet werden, woraufhin ein Rückruf von der Rufverarbeitungseinheit zu dem Empfängertelefon erfolgt, und dass die Rufverarbeitungseinheit Mittel aufweist, um die Kommunikation gemäß der von dem Empfängertelefon ausgewählten Funktion fortzusetzen.

28. System nach Anspruch 27, **dadurch gekennzeichnet, dass** jede Nachricht von dem Empfänger durch Drücken eines oder mehrerer Knöpfe oder Stellen auf einem Touchscreen auswählbar ist.

29. System nach Anspruch 27, **dadurch gekennzeichnet, dass** jede Nachricht durch gesprochene Worte auswählbar ist.

30. System nach einem der Ansprüche 27 - 29, **dadurch gekennzeichnet, dass** die Rufverarbeitungseinheit eine Sprachdialogeinheit, IVR-Einheit, ist.

## Revendications

1. Un procédé de direction d'appels dans un réseau de télécommunication comprenant au moins un téléphone et une unité de traitement d'appels avec un ou plusieurs messages enregistrés dans celle-ci, les messages correspondant à des fonctions sélectionnables en fonction desquelles une communication dans le réseau se déroule,
**caractérisé par** les étapes suivantes
a) la direction d'un appel entrant n'ayant pas fait l'objet d'une réponse par le téléphone de destinataire du téléphone de destinataire vers l'unité de traitement d'appels, après quoi un rétroappel de l'unité de traitement d'appels vers le téléphone de destinataire est effectué,
b) la sélection d'une fonction au niveau du téléphone de destinataire et le signalement de ladite fonction sélectionnée du téléphone de destinataire vers l'unité de traitement d'appels, et
c) la poursuite de la communication dans le réseau conformément à la fonction sélectionnée.

2. Le procédé selon la revendication 1, **caractérisé en ce qu'**à l'étape b) le destinataire sélectionne une autre fonction qui transmet l'appel à un numéro spécial ou sous la forme d'une conférence téléphonique programmée à l'avance dans l'unité de traitement d'appels.

3. Le procédé selon la revendication 1 **caractérisé par**, après l'étape b), la présentation à l'appelant de l'appel entrant d'un message envoyé à partir de l'unité de traitement d'appels, lequel message correspond à la fonction sélectionnée.

4. Le procédé selon l'une quelconque des revendications 1 à 3, **caractérisé en ce que** l'appel entrant est dirigé vers l'unité de traitement d'appels du téléphone de destinataire par la pression d'une certaine touche ou de certaines touches sur le téléphone, ce qui connecte l'appel à l'unité de traitement d'appels.

5. Le procédé selon l'une quelconque des revendications 1 à 3, **caractérisé en ce que** l'appel entrant est dirigé vers l'unité de traitement d'appels automatiquement si le destinataire a un autre appel en cours.

6. Le procédé selon l'une quelconque des revendications 1 à 3, **caractérisé en ce que** l'appel entrant est dirigé vers l'unité de traitement d'appels au moyen d'un numéro de service spécial.

7. Le procédé selon la revendication 1, **caractérisé en ce qu'**à l'étape b) la fonction sélectionnée est un message à diffuser ou à envoyer à l'appelant de l'appel entrant, la sélection étant effectuée au moyen d'une ou de plusieurs touche(s), ce qui connecte le(s) message(s) souhaité(s) à l'appelant.

8. Le procédé selon la revendication 1, **caractérisé en ce qu'**à l'étape b) la fonction sélectionnée est un message à diffuser ou à envoyer à l'appelant de l'appel entrant, la sélection étant effectuée par une non-réponse à l'appel en retour effectué par l'unité de traitement d'appels à l'étape a), en conséquence de laquelle la sélection du(des) message(s) souhaité(s) étant connecté(s) à l'appelant de l'appel entrant.

9. Le procédé selon la revendication 1, **caractérisé en ce qu'**à l'étape b) la fonction d'appel sélectionnée est une sélection qui résulte en une communication entre l'unité de traitement d'appels et le destinataire, la communication étant effectuée par des appels en retour successifs au destinataire destinés à faire l'objet d'une réponse ou d'un rejet par le destinataire.

10. Le procédé selon les revendications 1 et 9, **caractérisé en ce que** l'appel de l'unité de traitement d'appels vers le téléphone de destinataire à l'étape a) est déclenché par un appel entrant provenant d'un appelant, ce qui démarre ladite communication d'appels successifs destinés à faire l'objet d'une réponse ou d'un rejet par le destinataire.

11. Le procédé selon les revendications 1 et 9, **caractérisé en ce que** l'appel de l'unité de traitement d'appels vers le téléphone de destinataire à l'étape a) est déclenché par une fonction d'horloge exécutée dans l'unité de traitement d'appels en fonction de laquelle l'unité de traitement d'appels démarre ladite communication d'appels successifs à un/des instant(s) donné(s).

12. Le procédé selon l'une quelconque des revendications 9 à 11 **caractérisé en ce que** les intervalles temporels entre les appels successifs sont régulés séparément ou synchronisés de manière intelligente.

13. Le procédé selon l'une quelconque des revendications 9 à12 **caractérisé en ce que** ladite communication est une liste de contrôle avec des aspects à confirmer par le destinataire un par un.

14. Le procédé selon l'une quelconque des revendications 9 à13 **caractérisé en ce que** les aspects de la liste de contrôle sont confirmés par le destinataire par une non-réponse aux appels en retour ou par la pression d'une ou de plusieurs touches.

15. Le procédé selon la revendication 1, **caractérisé en ce que** la fonction sélectionnée à l'étape b) est un message combiné à partir de deux ou plus messages enregistrés dans l'unité de traitement d'appels.

16. Le procédé selon la revendication 15, **caractérisé en ce qu'**à l'étape b) la fonction d'appel sélectionnée est un message à diffuser ou à envoyer à l'appelant, la sélection étant effectuée au moyen d'une ou de plusieurs touches, ce qui connecte le message combiné souhaité à l'appelant.

17. Le procédé selon la revendication 1, **caractérisé en ce que** la fonction d'appel sélectionnée à l'étape b) ou sélectionnée par une non-réponse est un message standard enregistré dans l'unité de traitement d'appels.

18. Le procédé selon la revendication 1, **caractérisé en ce qu'**à l'étape b) la fonction sélectionnée est un message à envoyer à l'appelant de l'appel entrant et/ou au destinataire avec les informations permettant de sélectionner un appel direct, une conférence téléphonique ou une fonction de message.

19. Le procédé selon la revendication 18, **caractérisé en ce que** l'appel direct est effectué au moyen d'une certaine touche sur le téléphone de l'appelant et/ou du destinataire qui ouvre une connexion entre l'appelant et le destinataire à utiliser pour un appel normal, une conférence téléphonique ou pour l'enregistrement d'un message.

20. Le procédé selon la revendication 19, **caractérisé en ce que** la forme de l'appel direct est démarrée par le destinataire.

21. Le procédé selon la revendication 1, **caractérisé par** l'étape complémentaire d) de dépôt ou d'envoi d'un message par l'appelant à l'unité de traitement d'appels pour le destinataire.

22. Le procédé selon la revendication 21, **caractérisé en ce que** l'étape d) est exécutée vers la boîte de messages du destinataire par l'intermédiaire d'une connexion ouverte par l'unité de traitement d'appels au cours de l'envoi du message à l'appelant.

23. Le procédé selon la revendication 22, **caractérisé en ce que** l'étape d) est exécutée vers l'unité de traitement d'appels et qu'ensuite le message est transféré à la boîte de messages du destinataire.

24. Le procédé selon l'une quelconque des revendications 1 à 23, **caractérisé en ce que** l'unité de traitement d'appels est une unité de réponse vocale interactive, IVR.

25. Le procédé selon l'une quelconque des revendications 1 à 24, **caractérisé en ce qu'**une technologie multifréquence à deux tonalités, DTMF, ou de reconnaissance vocale est utilisée pour la sélection des messages à diffuser ou à envoyer.

26. Le procédé selon l'une quelconque des revendications 1 à 24, caractérisé en que les messages sont des messages vocaux, des messages de service d'envoi de messages courts, SMS, ou d'autres messages textuels, messages électroniques, ou un autre type de données.

27. Un système de télécommunications comprenant au moins un téléphone d'appelant, au moins un téléphone de destinataire et une unité de traitement d'appels avec deux ou plus messages enregistrés dans celle-ci, les messages correspondant à des fonctions sélectionnables en fonction desquelles une communication dans le réseau se déroule, **caractérisé en ce que** le système comprend des fonctionnalités en fonction desquelles des appels entrants n'ayant pas fait l'objet d'une réponse par le téléphone de destinataire sont dirigés du téléphone de destinataire vers l'unité de traitement d'appels, après quoi un rétroappel de l'unité de traitement d'appels vers le téléphone de destinataire est effectué, et **en ce que** l'unité de traitement d'appels possède un moyen de poursuivre une communication conformément à la fonction sélectionnée exécutée par le téléphone de destinataire.

28. Le système selon la revendication 27, **caractérisé en ce que** chaque message peut être sélectionné par le destinataire par la pression d'une ou de plusieurs touches ou points sur un écran tactile.

29. Le système selon la revendication 27, **caractérisé en ce que** chaque message peut être sélectionné par des mots prononcés.

30. Le système selon l'une quelconque des revendications 27 à 29, **caractérisé en ce que** l'unité de traitement d'appels est une unité de réponse vocale interactive, IVR.
